Europäisches Patentamt

European Patent Office

Office européen des brevets

(19)

(11) Publication number: **0 063 882**
**A1**

## (12) EUROPEAN PATENT APPLICATION

(21) Application number: **82301828.8**

(22) Date of filing: **07.04.82**

(51) Int. Cl.³: **B 60 J 7/00,** B 60 H 1/26

(30) Priority: **24.04.81 GB 8112663**

(43) Date of publication of application: **03.11.82**
**Bulletin 82/44**

(84) Designated Contracting States: **DE FR GB**

(71) Applicant: **BRITAX WEATHERSHIELDS LIMITED,**
**151 Bishop Street, Birmingham B5 7EH (GB)**

(72) Inventor: **Fisher, Sidney Edward, 645 Fox Hollies Road,**
**Hall Green Birmingham, B28, 9DW (GB)**
Inventor: **Morgan, Geoffrey Charles, 74 Cotton Lane,**
**Moseley Birmingham, B13 9SE (GB)**

(74) Representative: **Hollinghurst, Antony, Britax Central**
**Services 40 Granby Avenue, Garretts Green**
**Birmingham, B33 OSJ (GB)**

(54) Improvements in opening roofs for vehicles.

(57) The opening roof consists of a panel (12) supported
in a frame (10) which is fixed to the vehicle roof (20).
The frame (10) is secured in place by struts (34) which
are spot-welded to the underside of the vehicle roof
(20) and engage mechanically with a formation (44) on
the frame (10).

EP 0 063 882 A1

ACTORUM AG

- 1 -

## Improvements in Opening Roofs for Vehicles

This invention relates to opening roofs for vehicles of the kind in which a frame is provided for surrounding an opening in a roof of a vehicle and a panel assembly co-operating with the frame is movable with respect to the frame to expose portions of the opening for ventilation purposes.

The panel assembly may comprise a rigid panel, conveniently of glass, which is detachably hinged to the forward edge of the frame and is coupled to the rear edge by at least one over-centre toggle catch which is releasable to enable the panel to be hinged into an open position and which is detachable to enable the panel to be removed from the frame.

In another construction the panel assembly comprises a rigid panel which is slidably guided between rails in the side member of the frame to expose substantially the whole of the opening or at least a portion of the front of the opening.

In yet another construction the panel assembly may comprise a flexible fabric covering which is supported by a number of slidably mounted cross-members which are guided at their ends in guide rails in the side members of the frame, one end of the covering is fixed relative to the rear ends of the guide rails, and the other end of the covering is manually movable to open or close the roof.

In opening roofs of the foregoing kind the frame is adapted to be inserted into the opening in the roof, normally from the exterior of the vehicle. A flange overlies a portion of the roof which surrounds the opening to support the frame in position and form a waterproof seal. Because of the relatively thin material of which vehicle roofs are commonly formed, it is necessary for the flange to be rigidly clamped to the vehicle roof round substantially all of its periphery. Our European Patent Specification No. 10430 discloses an opening roof having a frame of this type, with clamping means in the form of resilient clamping strips which engage with the lower surface of the vehicle roof, below the flange, and a formation on the frame. These strips are held in place by screws which extend through holes in the frame which must be sealed after installation to prevent ingress of water. The present invention aims to provide an opening roof of the foregoing type which can be installed without the need to provide such holes through the frame.

According to the invention, an opening roof for a vehicle, comprises a frame for surrounding an opening roof in a roof of a vehicle, a panel assembly co-operating with the frame and movable with respect to the frame to expose portions of the opening, the frame including a flange which projects outwardly from a depending web to overlie a portion of the vehicle roof surrounding the opening and clamping means being provided on each side of the frame to clamp the flange against the roof, the clamping means comprising, on each side of the frame, a respective strut having one end engaging with a formation on the frame extending outwardly from the depending web and the other end arranged to exert an upward force on the vehicle roof below said flange, said other end being inhibited from outward movement away from the frame.

In one form of the invention, a row of individual struts is provided on each side of the frame. Each such strut extends along a relatively short portion of the corresponding side of the frame. Groups of such individual struts may be formed from a continuous strip of material so that adjacent struts are connected to one another. Alternatively, each strut may be formed as a separate component.

When an opening roof in accordance with the invention is to be installed in a vehicle during manufacture, the various struts may be formed by turning down the edge of the opening in the vehicle roof. Alternatively, the struts may be formed as one or more separate components which are bonded to the edge of the opening in the vehicle roof, for example by spot welding. When the opening roof is to be installed in an already painted vehicle, it is preferable for the components forming the struts to be shaped to engage mechanically with the edge of the opening.

In one form of the invention, the struts are permanently deformed during installation so as to extend in a rigid manner between the underside of the vehicle roof and the formation on the frame. In another form of the invention, the struts are bowed ,with the result that they so extend in a resilient manner.

Embodiments of the invention will now be described by way of example, with reference to the accompanying drawings, in which:

Figure 1 is a longitudinal section through an opening roof in accordance with the invention,

Figure 2 is an elevational view of part of the strut-forming component used in the opening roof shown in Figure 1, and

Figures 3 to 6 are fragmentary cross-sectional views, each illustrating a respective alternative embodiment of the invention.

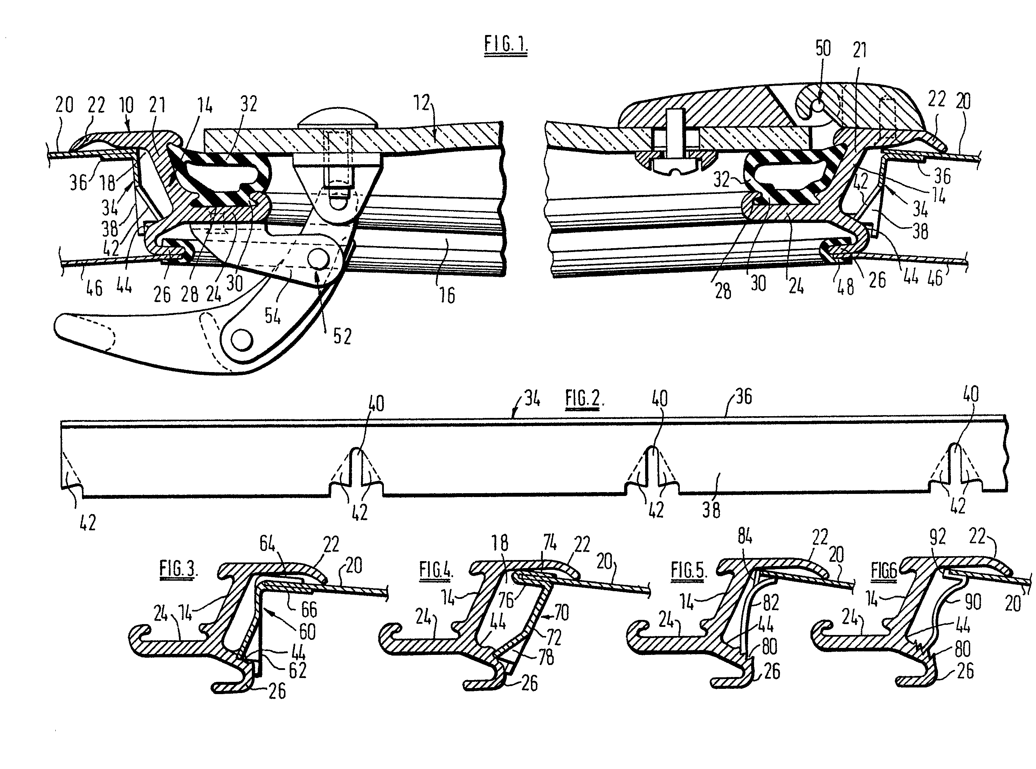

The opening roof illustrated in Figure 1 comprises a frame 10 to which a rigid panel 12, suitably of glass or other transparent or translucent material, is hingedly connected in a detachable manner.

The frame 10 comprises spaced parallel end and side members 14, 16 which are continuous with each other to constitute a unitary skeletal frame for reception within a rectangular opening 18 in the roof 20 of a vehicle.

Each member 14, 16 comprises a web 21 which is inclined inwardly from a first outwardly directed upper flange 22 to a second inwardly directed lower flange 24. Each flange 22, 24 projects beyond the opposite face of the web 21 and the projection of the flange 24 is turned back on itself into an inturned lip 26. The upper face of the flange 24 is provided with a slot 28 of generally dovetail outline to receive a bead 30 of complementary outline on a continuous sealing strip 32 of elastomeric material which is disposed within the frame 10 on the flange 24 to fill the space between its inner edge, the web 21, and the projection of the flange 22.

When the frame 10 is dropped, or lowered, into the opening 18 from the exterior of the vehicle the flange 22 overlies a portion of the roof 20 which surrounds the opening 18. The flange 22 is clamped against the roof 20 by means of struts which are located at spaced positions around the frame and of which struts for the side members 14 are formed from strips 34.

Each strip 34, is L-shaped, having one limb 36 spot-welded to the underside of the vehicle roof 20 so that the other limb 38 extends downwardly adjacent to the edge of the opening 18. As can best be seen in Figure 2, a series of vertical slots 40 are cut in the limb 38. The bottom corners of the slots 40 are shaped to form corner zones 42. During installation, when the frame 10 has been positioned in the opening 18, the corner zones 42 are deformed inwardly to bring their free ends into engagement with the upper surface 44 of the outward projection of the flange 24 which carries the lip 26. Thus each inturned corner zone 42 forms part of a rigid strut extending between the surface 44 and the vehicle roof 20. Preferably, as illustrated, the flange 22 has a recess 24 in its inner face so that the flange 22 engages with the roof 20 only at its outer and inner ends. A resilient seal (not shown) may be accommodated in the recess.

The assembly is completed by clamping head lining 46 to the lip 26 by means of a detachable strip 48 of generally U section.

The rigid panel 12 is hinged to the front end member 14 of the frame by spaced hinges 50 which are detachable, and to the other rear end member 14 by a toggle catch 52 of the over-centre type. The catch 52 includes an apertured tongue which is received in a block 54 on the rear end member 14 of the frame, and from which the tongue can be withdrawn after depression of a spring-loaded catch.

In the closed position the panel seals all the way round on the sealing strip 32 and is generally flush with or slightly below the upper surface of the flange 22 so that its presence is unobtrusive.

The strip 34 may comprise a complete ring extending all the way round the opening 18 in the vehicle roof 20. Alternatively, it may be formed as two U-shaped components, each component extending along the whole of one side and part of each of the two adjacent sides.

As another alternative, four L-shaped components may be provided, each running along most of one side and an adjacent corner. A further alternative is to provide a series of straight sections together with four curved corner sections. Other alternatives will readily occur to those skilled in the art.

Instead of forming the strip 34 as a separate component to be·spot welded or otherwise attached to the vehicle roof, the equivalent of the limb 38 thereof may be formed by turning down the edge of the vehicle roof round the opening. This alternative is particularly suitable for use when an opening roof in accordance with the invention is to be installed during manufacture of a vehicle.

When an opening roof in accordance with the invention is to be installed in an already painted vehicle body, it is preferable not to have to weld the strip 34 on to the vehicle roof 18 as the latter may be distorted by the welding operation. Figure 3 illustrates an alternative in which the strip 34 is replaced by an L-shaped strip 60. The downwardly extending limb 62 of the strip 60 is identical with the limb 38 of the strip 34 but the horizontal limb is sheared at regular intervals along its length to provide alternate tongues 64 and 66 which extend respectively above and below the vehicle roof 20. The spacing between the tongues 64 and 66 is such that they are an interference fit with the roof 20. The procedure for completion of the installation is the same as that already described with reference to Figures 1 and 2.

Figure 4 illustrates another alternative, using a strip 70 which has a downwardly extending limb 72. However, the horizontal limb is formed as a rolled flange having an end portion 74 above and an intermediate portion 76 below the vehicle roof 20 which is an interference fit between the portions 74 and 76. Since the limb 72 depends from the outer end (relative to the opening 18) of the intermediate portion 76, the angle between the line of action of the strut and the vertical is somewhat greater and consequently the slots 78, corresponding to the slots 40, can be somewhat shorter.

Figures 5 and 6 illustrate alternative embodiments in which the struts are formed as a series of individual resilient clips. The upper surface 44 of the projection of the flange 24 is formed with a series of serrations 80. In Figure 5, each clip 82 extends in a bow-shaped formation between the serrations 80 and the underside of the vehicle roof 20, with a tongue 84 on the clip 82 engaging with the edge of the opening 18. In Figure 6, the clip 90 has a step-like formation 92 which engages with the opening 18 and extends in a flattened S-shaped formation between the under-surface of the roof 20 and the serrations 80. Adjacent clips 90 may be interconnected, with their formations 92 being respective parts of an elongate strip. Other alternatives will occur to those skilled in the art.

CLAIMS

1.      An opening roof for a vehicle, comprising a frame (10)
for surrounding an opening in a roof of a vehicle, and a panel
assembly (12) co-operating with the frame (10) and movable with
respect to the frame (10) to expose portions of the opening, the
frame including a flange (22) which projects outwardly from a
depending web (21) to overlie a portion of the vehicle roof (20)
surrounding the opening, and clamping means being provided on
each side of the frame (10) to clamp the flange (22) against the
vehicle roof (20), characterised in that the clamping means comprises,
on each side of the frame, a respective strut (34) having one end
engaging with a formation (44) on the frame (10) extending outwardly
from the depending web (21) and the other end arranged to exert an
upward force on the vehicle roof (20) below said flange (22), said
other end being inhibited from outward movement away from the frame
(10).

2.      A roof according to claim 1, characterised in that a row
of individual struts is provided on each side of the frame.

3.      A roof according to claim 2, characterised in that groups
of individual struts (42) are formed from a continuous strip (34)
so that adjacent struts are connected to one another.

4.      A roof according to claim 3, characterised in that each
strut (42) comprises a turned down edge of the opening in the vehicle
roof (20).

5.      An opening roof according to claim 1, 2 or 3, characterised
in that the struts (42) are formed as separate components which are
bonded to the edge of the opening in the vehicle roof (20).

6.      A roof according to claim 1, 2 or 3, characterised in that
the components (60, 70) forming the struts are shaped to engage
mechanically with the edge of the opening, so as to inhibit said
outward movement away from the frame (10).

7.      A roof according to any preceding claim, characterised
in that the struts (34, 60, 70) are permanently deformed during
installation so as to extend in a rigid manner between the underside
of the vehicle roof (20) and the formation (44) on the frame.

8.        A roof according to any of claims 1 to 7, characterised
in that the struts (82, 90) are bowed so as to extend in a resilient
manner between the underside of the vehicle roof (20) and the
formation (44) on the frame.

FIG.1.

FIG.2.

FIG.3.  FIG.4.  FIG.5.  FIG6.

C063882

European Patent
Office

**EUROPEAN SEARCH REPORT**

EP 82 30 1828.8

| | DOCUMENTS CONSIDERED TO BE RELEVANT | | CLASSIFICATION OF THE APPLICATION (Int. Cl. ³) |
|---|---|---|---|
| Category | Citation of document with indication, where appropriate, of relevant passages | Relevant to claim | |
| A | US - A - 3 913 971 (H. GREEN) <br> * fig. 3 * <br> -- | 1 | B 60 J 7/00 <br> B 60 H 1/26 |
| A | US - A - 3 974 753 (D.C. BLOMGREN et al.) <br> * fig. 8 * <br> -- | 1 | |
| D,A | EP - A1 - 0 010 430 (BRITAX WEATHER-SCHIELDS) <br> ---- | | TECHNICAL FIELDS SEARCHED (Int.Cl. ³) <br><br> B 60 H 1/00 <br> B 60 J 7/00 |

CATEGORY OF CITED DOCUMENTS

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

| X | The present search report has been drawn up for all claims |
|---|---|

| Place of search <br> Berlin | Date of completion of the search <br> 02-06-1982 | Examiner <br> BECKER |
|---|---|---|

EPO Form 1503.1   06.78